# EUROPÄISCHE PATENTANMELDUNG

(11) **EP 2 719 614 A1**
(43) Veröffentlichungstag der Anmeldung: **16.04.2014**
(21) Anmeldenummer: 14150460.5
(22) Anmeldetag: 06.08.2012
(51) Int. Cl.: B62K 25/28

(54) **Fahrradrahmen**

(30) Priorität: 30.08.2011 DE 202011104974 U
(62) Teilanmeldung aus: 12746075.6
(71) Anmelder: Canyon Bicycles GmbH, 56073 Koblenz (DE)
(72) Erfinder: Thoma, Vincenz, 56068 Koblenz (DE)
(74) Vertreter: von Kreisler Selting Werner

(57) **Zusammenfassung**

Ein Fahrradrahmen, bei dem es sich insbesondere um einen Mountainbike-oder Trackingradrahmen handelt, weist ein Hauptrahmenelement (10) auf. Mit dem Hauptrahmenelement (10) ist ein Hinterbau (18) über eine Wippe (26) schwenkbar verbunden. Zwischen dem Hinterbau (18) und dem Hauptrahmenelement (10) ist ein Dämpfungselement (32) angeordnet. Ein erster Verbindungspunkt (30) des Dämpfungselements (32) ist über die Wippe (26) mit dem Hinterbau (18) und ein zweiter Verbindungspunkt (34) des Dämpferelements (32) mit dem Hauptrahmenelement (10) verbunden. Zur Veränderung der Fahrwerkscharakteristik ist ein Verschiebeelement (36) zum Verschieben des ersten Verbindungspunktes (30) vorgesehen. Die Arretierung des Verschiebeelements (36) erfolgt mit Hilfe eines Betätigungselements (46).

## Beschreibung

Die Erfindung betrifft einen Fahrradrahmen, insbesondere einen Fahrradrahmen für Mountainbikes oder Trackingräder.

Insbesondere Fahrrädern, die in stark unterschiedlichen Fahrzuständen verwendet werden, wie insbesondere bei Mountainbikes oder Trackingrädern, ist das Vorsehen eines gefederten Hinterbaus, d.h. eines Hinterbaus der schwenkbar mit einem Hauptrahmenelement verbunden ist, üblich. Bei einem solchen Rahmen ist das Hauptrahmenelement durch ein Oberrohr, ein Unterrohr und ein Sattelrohr gebildet, wobei auch andere Rahmengeometrien möglich sind. Bei unterschiedlichen Fahrzuständen zwischen starkem Gefälle und starken Steigungen verändert sich die Lastverteilung zwischen Vorderrad und Hinterrad sehr stark. So wirken beim Fahren in der Ebene etwa 70% der Gewichtskraft auf das Hinterrad und nur 30% auf das Vorderrad. Hingegen sind beim Bergauffahren annähernd 100% des Gewichts auf dem Hinterrad, so dass das Vorderrad ggf. sogar geringfügig vom Boden abhebt. Ebenso kann es bei steilen Bergabfahrten vorkommen, dass annähernd 100% des Gewichts auf dem Vorderrad lasten, so dass ein Abheben des Hinterrads auftreten kann.

Bei Fahrrädern wie Mountainbikes, die ein Dämpfungselement zur Dämpfung einer Bewegung des Hinterbaus aufweisen, erfolgt ein Einstellen des Dämpfungselements derart, dass etwa 20-30% des Federwegs als Negativfederweg vorhanden sind. Dies bedeutet, dass das Dämpfungselement bei statischer Belastung durch das Gewicht des Fahrers etwa 20-30% des Gesamtfederwegs einfedert. Hierdurch erfolgt ein Ausfedern des Hinterbaus beim Überfahren von Unebenheiten, wie Löcher und dergleichen. Hierdurch ist der Komfort und die Traktion verbessert. Eine derartige Einstellung des Negativfederwegs führt beim Bergauffahren dazu, dass der Sitzwinkel flach wird und sich die Sitzposition des Fahrers hierdurch in Richtung des Hinterrades verschiebt. Dies bewirkt ein Abheben des Vorderrads bereits bei relativ geringen Steigungen. Ferner ist das Fahrwerk sensibel für Antriebseinflüsse. Die Antriebseinflüsse können durch ein Einstellen der Druckstufendämpfung unterdrückt werden, wobei hierdurch jedoch ein Umwandeln von Energie in Wärme erfolgt, so dass die Kraft des Fahrers nicht vollständig zur Fortbewegung des Fahrrads genutzt wird. Ferner bewirkt ein Unterdrücken der Antriebseinflüsse keine Änderung der Geometrie, so dass diese für das Bergauffahren weiterhin ungünstig ist. Alternativ könnte eine Veränderung des Luftdrucks in dem Dämpfungselement beim Bergauffahren erfolgen, wobei der Luftdruck beim Bergauffahren erhöht werden müsste. Dies stellt jedoch einen erheblichen Aufwand dar.

Aus US 7,712,757 ist ein Mountainbikerahmen mit einem Hauptrahmenelement und einem gelenkig mit diesem verbundenen Hinterbau bekannt. Ein Dämpfungselement ist an einem ersten bzw. oberen Verbindungspunkt über eine erste Wippe mit dem Hinterbau schwenkbar verbunden. Der untere oder zweite Verbindungspunkt des Dämpferelements ist über ein Zwischenelement mit dem Unterrohr schwenkbar verbunden. Das Zwischenelement bzw. eine zweite Wippe trägt das Hauptschwingenlager, d.h. das Schwingenlager des Hinterbaus. Das Hauptschwingenlager ist somit nicht unmittelbar mit dem Hauptrahmenelement, sondern nur mittelbar über das Verbindungselement mit diesem verbunden.

Ferner ist bei der in US 7,712,757 beschriebenen Konstruktion zwischen dem Verbindungselement und dem Sattelrohr ein Federelement angeordnet, durch das der untere bzw. zweite Verbindungspunkt des Dämpferelements verschoben werden kann. Die Verschiebung des zweiten Verbindungspunkts erfolgt hierbei automatisch in Abhängigkeit der Kettenspannung. Die Abhängigkeit des Dämpfungsverhaltens von der Kettenspannung wird von Fahrradfahrern häufig als unangenehm empfunden. Dies ist insbesondere bei Fahrten im Gelände, beim sich relativ häufig und stark bewegendem Hinterbau der Fall. Ferner wird durch die Verlagerung des Hauptschwingenlagers in ein sich bewegendes Verbindungselement die Rahmensteifigkeit verringert. Ferner weist die in US 7,712,757 beschriebene Lösung den Nachteil auf, dass hierdurch das Gesamtgewicht des Rahmens stark erhöht wird. Des Weiteren ist es bei der in US 7,712,757 beschriebenen Lösung erforderlich den unteren bzw. zweiten Verbindungspunkt des Dämpfungselements stark zu verschieben, um einen relevanten Einfluss auf Dämpfungswirkung bzw. eine relevante Änderung der Dämpfungs- bzw. Federkennlinie zu erzielen. Dies führt dazu, dass die Teile entsprechend massiv ausgebildet sein müssen, da Verschiebungen von mehr als 40 mm bis 50 mm erforderlich sind. Auch muss durch das Verbindungselement und das als Feder ausgebildete Verschiebungselement die Aufnahme erheblicher Kräfte gewährleistet sein, so dass auch aus diesem Grund eine massive Ausgestaltung dieser Bauteile erforderlich ist, wodurch das Gesamtgewicht des Rahmens erhöht wird.

Zur Veränderung der Rahmengeometrie ist es ferner aus US 6,877,591 bekannt, die Lage des zweiten, mit dem Hauptrahmenelement verbundenen Verbindungspunktes zu verändern. Der zweite Verbindungspunkt ist über ein Fixierelement mit dem Unterrohr verbunden und in unterschiedlichen Positionen fixierbar. Das Verändern der Verbindungsposition ist nur durch Lösen des Verbindungspunktes mit Hilfe von Werkzeug möglich. Die Lageveränderung des zweiten Verbindungspunktes ist daher äußerst aufwendig und insbesondere nicht während der Fahrt möglich.

Des Weiteren ist aus GB 2 360 497 eine Anordnung eines Dämpferelements zwischen einem gefederten Hinterbau und dem Hauptrahmenelement bekannt. Der erste Verbindungspunkt des Dämpferelements mit dem Hinterbau erfolgt hierbei nicht über eine mit dem Hauptrahmenelement verbundene Wippe, sondern unmittelbar. Der zweite Verbindungspunkt des Dämpferelements ist fest mit dem Hauptrahmenelement verbunden. Zur Veränderung der Rahmengeometrie kann der erste Verbindungspunkt in einem Führungsschlitz verschoben werden. Auch hierbei handelt es sich nur mit Werkzeug aufwendig veränderbare Rahmengeometrie, die insbesondere nicht während Fahrt variiert werden kann.

Aufgabe der Erfindung ist es, einen Fahrradrahmen, insbesondere für Mountainbikes und Trackingfahrräder, zu schaffen, der auf einfache Weise an unterschiedliche Fahrsituationen anpassbar ist.

Die Lösung der Aufgabe erfolgt erfindungsgemäß durch die Merkmale des Anspruchs 1.

Der erfindungsgemäße Fahrradrahmen, der insbesondere für Mountainbikes oder Trackingräder geeignet ist, weist ein Hauptrahmenelement sowie ein schwenkbar mit diesem verbundenen Hinterbau auf. Das Hauptrahmenelement weist insbesondere ein Oberrohr, ein Unterrohr und ein Sattelrohr auf, wobei auch andere Rahmengeometrien möglich sind. Der Hinterbau ist über eine, beispielsweise nahe der Tretlageraufnahme angeordnete, Schwenkachse schwenkbar mit dem Hauptrahmenelement verbunden. Vorzugsweise weist der Hinterbau mindestens eine, insbesondere zwei Kettenstreben auf, die über eine Schwenkachse bzw. ein Hauptschwingenlager mit dem Hauptrahmenelement vorzugsweise nahe der Tretlageraufnahme verbunden sind. Des Weiteren weist der Hinterbau vorzugsweise zwei im Bereich der Ausfallenden der mindestens einen Kettenstrebe mit diesen insbesondere gelenkig verbundenen Sitzstreben auf. Die Sitzstreben führen von den Ausfallenden der Kettenstreben in Richtung des Sattelrohrs des Hauptrahmenelements.

Der Hinterbau, insbesondere die mindestens eine Sitzstrebe des Hinterbaus, ist über einen ersten Verbindungspunkt mit dem Dämpfungselement mittelbar oder unmittelbar verbunden, wobei eine mittelbare Verbindung unter Zwischenschaltung einer Wippe bevorzugt ist. Hierbei sind insbesondere die beiden Sitzstreben schwenkbar mit einer am Hauptrahmenelement, insbesondere am Sattelrohr schwenkbar gehaltenen Wippe verbunden. Ferner ist es möglich, entsprechend ausgebildete Wippen mit dem Oberrohr oder dem Unterrohr des Hauptrahmenelements zu verbinden. Die in Seitenansicht insbesondere einen wesentlichen dreieckigen Querschnitt aufweisende Wippe ist sodann bei dieser bevorzugten Ausführungsform mit dem ersten Verbindungspunkt des Dämpfungselements verbunden. Bei dieser bevorzugten Ausführungsform weist die Wippe somit drei Anlenkpunkte auf, wobei einer mit der mindestens einen Sitzstrebe, ein weiterer mit dem Sattel-, dem Unter- oder dem Oberrohr des Hauptrahmenelements und der dritte mit dem ersten Verbindungspunkt des Dämpfungselements gegebenenfalls mittelbar verbunden ist. Selbstverständlich sind auch andere Ausgestaltungen der Wippe und auch andere Verbindungen zwischen dem Hinterbau und dem Dämpfungselement möglich.

Das Dämpfungselement ist über einen zweiten Verbindungspunkt mit dem Hauptrahmenelement, insbesondere dem Sattelrohr des Hauptrahmenelements verbunden. Der zweite Verbindungspunkt des Dämpfungselements kann auch mit dem Unterrohr oder dem Oberrohr des Hauptrahmenelements verbunden sein. Die Schwenkbewegung des Hinterbaus wird somit beim Einfedern durch das Dämpfungselement gedämpft und aufgrund des Einstellens eines Negativfederwegs wird von dem Dämpfungselements ein Ausfedern unterstützt.

Erfindungsgemäß ist zum vorzugsweise im Wesentlichen horizontalen Verschieben des ersten Verbindungspunkts des Dämpfungselements ein Verschiebeelement vorgesehen. Mit Hilfe des Verschiebeelements kann somit die Lage des ersten Verbindungspunktes und somit die Lage des Dämpfungselements verändert werden. Die Veränderung der Lage des Dämpfungselements bewirkt ein Verändern der Fahrwerkscharakteristik. Durch das erfindungsgemäße Vorsehen eines Verschiebeelements kann somit insbesondere auch während der Fahrt ein aktives Verschieben des ersten Verbindungspunktes erfolgen. Es ist erfindungsgemäß somit ein Verändern der Rahmengeometrie kurzfristig möglich, so dass die Rahmengeometrie kurzfristig an die Fahrsituation (bergauf oder bergab) angepasst werden kann.

Gegebenenfalls kann zusätzlich zur Lageveränderung des ersten Verbindungspunkts auch eine Lageveränderung des zweiten Verbindungspunktes erfolgen, wobei es erfindungsgemäß bevorzugt ist, dass nur die Lage des ersten Verbindungspunkts mit Hilfe des Verschiebeelements veränderbar ist. Der zweite Verbindungspunkt ist vorzugsweise fest am Hauptrahmenelement angeordnet, so dass lediglich ein Verschwenken des Dämpfungselements um den zweiten Verbindungspunkt möglich ist. Gegebenenfalls kann der zweite Verbindungspunkt auch mittelbar über ein Zwischenelement mit dem Hauptrahmenelement verbunden sein, so dass der zweite Verbindungspunkt schwimmend mit dem Hauptrahmenelement verbunden ist. Bei dieser Ausführung kann sich durch die Bewegung des Hinterbaus eine Lageveränderung des zweiten Verbindungspunktes ergeben, wobei diese erfindungsgemäß in bevorzugter Ausführungsform nicht aktiv über ein Verschiebeelement in seiner Lage veränderbar ist.

Insbesondere ist es bevorzugt, dass ein Verschieben des ersten Verbindungspunkts im Wesentlichen senkrecht zur Längsachse des Dämpfungselements erfolgt. Die Längsachse des Dämpfungselements sowie die Verschieberichtung weisen hierbei vorzugsweise einen Winkel von 80° bis 100° zueinander auf. Durch Verschieben des ersten Verbindungspunkts erfolgt ein Verändern der Federkennlinie des Gesamtsystems aus Hinterbau und Dämpfungselement.

Besonders bevorzugt ist es, dass der erste Verbindungspunkt des Dämpfungselements über eine Wippe mit dem Hinterbau verbunden ist, wobei sodann der mit der Wippe verbundene Verbindungspunkt mit Hilfe des Verschiebeelements verschiebbar ist. Bevorzugt ist es hierbei, dass der erste Verbindungspunkt mittelbar, insbesondere unter Zwischenschaltung eines Hebelelements mit der Wippe verbunden ist.

Beispielsweise ist ein Dämpfungselement derart angeordnet, dass es in einer Standardposition im Wesentlichen vertikal ausgerichtet ist. Vereinfacht wirkt somit die Gewichtskraft des Fahrers in Längsrichtung des Dämpfungselements. Dies führt insbesondere beim Bergauffahren zu einer Verlagerung der Sitzposition nach hinten und insbesondere bei einem üblicherweise eingestellten Negativfederweg von 20-30% des Gesamtfederwegs zu einer für das Bergauffahren ungünstigen Fahrwerksabstimmung. Erfindungsgemäß erfolgt bei einem derartig angeordneten Dämpfungselement ein Verschieben eines ersten Verbindungspunktes, d.h. beispielsweise des oberen Verbindungspunktes des Dämpfungselements, bei einem Bergauffahren nach vorne. Dies bewirkt, dass der Fahrer beim Bergauffahren das Dämpfungselement weniger zusammendrückt, d.h. der Negativfederweg reduziert wird. In dieser Position beträgt beim Bergauffahren der Negativfederweg vorzugsweise lediglich nur noch 8-12% des Gesamtfederwegs. Hierdurch ist die Fahrwerksabstimmung für das Bergauffahren deutlich verbessert. Wenn sich der erste Verbindungspunkt nicht nur auf einer Kreisbahn um den zweiten Verbindungspunkt bewegt sondern auf eine Weise, dass der Abstand der Verbindungspunkte anwächst, erfolgt zusätzlich eine Geometrieverstellung, die das Bergauffahren erleichtert. Die gesamte Geometrieveränderung ergibt sich erfindungsgemäß aus dem Unterschied des Negativfederwegs und der tatsächlichen neuen Geometrie im unbelasteten Zustand (wenn der Fahrer noch nicht auf dem Rad sitzt). In einer bevorzugten Ausführungsform betragen die Anteile der Geometrieänderung (1) aus der Änderung des SAGs und (2) aus tatsächlicher Verstellung der Hinterbaukonstruktion jeweils etwa 50% (oder 40/60 oder 60/40).

Durch das erfindungsgemäße Vorsehen eines Verschiebeelements, durch das zumindest ein Verschieben des ersten Verbindungspunktes des Dämpfungselements möglich ist, kann somit eine an die aktuelle Farbsituation angepasste Fahrwerkseinstellung bzw. angepasste Rahmengeometrie vorgenommen werden.

Bei dem Verschiebeelement handelt es sich vorzugsweise um ein elektrisch, hydraulisch oder pneumatisch betätigbares Verschiebeelement. Bevorzugt ist das Vorsehen eines mechanischen Federelements, so dass durch Kompression des Federelements eine Energiespeicherung erfolgt, die sodann zum Verschieben des ersten Verbindungspunktes aus einer Standardposition (ebene Fahrt und Bergabfahrt) in eine Bergauf-Position genutzt werden kann. Selbstverständlich ist auch eine Kombination der unterschiedlichen Betätigungsarten möglich.

Besonders bevorzugt ist das Vorsehen einer Wippe, durch die der Hinterbau mit dem Hauptrahmenelement und dem Dämpfungselement verbunden ist. Hierbei ist die Wippe in bevorzugter Ausführungsform schwenkbar am Hauptrahmenelement, insbesondere am Sattelrohr angeordnet. Um diesen Punkt ist die Wippe schwenkbar, wobei ein zweiter Anlenkpunkt der Wippe mit den Sitzstreben des Hinterbaus und der dritte Anlenkpunkt der Wippe mit dem Dämpfungselement verbunden sein kann. Dieser dritte Anlenkpunkt ist in bevorzugter Ausführungsform mit Hilfe des Verschiebeelements in seiner Lage verschiebbar, so dass das Dämpfungselement in zumindest zwei unterschiedlichen Positionen mit der Wippe verbindbar ist.

Bei einer besonders bevorzugten Ausführungsform der Erfindung ist der Hinterbau über eine Wippe mit dem Hauptrahmenelement verbunden, wobei der erste Anlenkpunkt der Wippe mit dem Hauptrahmenelement und der zweite Anlenkpunkt der Wippe mit den Sitzstreben des Hinterbaus verbunden ist. Bei dieser besonders bevorzugten Ausführungsform ist das Dämpferelement nicht unmittelbar, sondern mittelbar mit dem dritten Anlenkpunkt der Wippe verbunden. Die Verbindung erfolgt über ein Hebelelement. Das Hebelelement ist hierbei vorzugsweise schwenkbar am dritten Anlenkpunkt mit der Wippe und schwenkbar am ersten Verbindungspunkt des Dämpferelements befestigt. Durch Verschwenken des Hebelelements um den dritten Anlenkpunkt der Wippe erfolgt ein Verändern der Lage des ersten Verbindungspunktes und somit ein Verändern der Rahmengeometrie und der Dämpfungscharakteristik.

Das Verschwenken des Hebelelements um den dritten Anlenkpunkt erfolgt erfindungsgemäß durch das Verschiebeelement, das zur Lageänderung des ersten Verbindungspunkts vorgesehen ist. Hierbei kann das Verschiebeelement derart ausgebildet sein, dass ein Verschwenken des Hebelelements um den dritten Anlenkpunkt bewirkt wird, indem beispielsweise eine Schwenkachse des Hebelelements gedreht wird. Dies kann durch Einwirken eines Elektromotors auf die Schwenkachse erfolgen. Hierzu könnte die Schwenkachse beispielsweise eine Außenverzahnung aufweisen, auf die eine elektromotorisch angetriebene Schnecke wirkt. In besonders bevorzugter Ausführungsform ist das Verschiebeelement mit dem Hebelelement in einem Abstand zu dessen Schwenkachse, d.h. in einem Abstand zu dem dritten Anlenkpunkt verbunden. Durch Längenveränderung des Verschiebeelements erfolgt somit ein Verschwenken des Hebelelements und somit ein Verändern der Lage des ersten Verbindungspunktes. Hierbei ist es bevorzugt, dass das Verschiebeelement mit der Wippe und dem Hebelelement oder dem ersten Verbindungspunkt verbunden ist.

In besonders bevorzugter Ausführungsform ist das Verschiebeelement derart ausgestaltet, dass das Verschiebeelement in seiner Längsrichtung längenverstellbar bzw. längenvariabel ist. Hierzu kann das Verschiebeelement als elektrisches, pneumatisches oder hydraulisches Verschiebeelement oder als eine Kombination hiervon ausgebildet sein.

In bevorzugter Ausführungsform ist es mit Hilfe des Verschiebeelements möglich, zumindest den ersten Verbindungspunkt um mindestens 5 mm und insbesondere mindestens 10 mm zu verschieben. Vorzugsweise erfolgt ein Verschieben um weniger als 25 mm und insbesondere weniger als 20 mm. Hierdurch kann eine gute Fahrwerksabstimmung bereits bei kleinen Verschiebungen zumindest des ersten Verbindungspunkts erfolgen.

In einer besonders bevorzugten Weiterbildung der Erfindung ist das Verschiebeelement zumindest in einer Position arretierbar. Dies kann insbesondere über ein durch einen Hebel von Hand verstellbares Arretierelement oder ein auf andere Weise betätigbares Arretierelement erfolgen. Besonders bevorzugt ist eine Betätigung des Arretierungselements mit Hilfe eines Betätigungsmittels, so dass ein entferntes Betätigen möglich ist. Bevorzugt ist es hierbei, dass die Arretierung des Verschiebeelements über ein am Lenker des Fahrrad anordenbares Betätigungselement, insbesondere einen Betätigungshebel oder eine Betätigungstaste erfolgt. Hierbei kann ein Arretierelement über einen Seilzug oder auch hydraulisch betätigt werden. Auch ist eine elektrische Betätigung oder ein Betätigen über Funk möglich. Beispielsweise kann es sich bei dem Verschiebeelement auch um einen mit Hilfe eines Elektromotors angetriebenes Verschiebeelement handeln, so dass ein Arretieren durch das Ausschalten des Motors möglich ist. Unabhängig von der Ausführungsform des Verschiebeelements ist es bevorzugt, dass ein Arretieren zumindest in den beiden Extrempositionen möglich ist, wobei vorzugsweise ein Arretieren auch in einer oder mehreren Zwischenpositionen erfolgen kann.

Die Möglichkeit der individuellen Arretierung, insbesondere mit Hilfe einer Art Fernbedienung verbessert den Fahrkomfort aufgrund der individuellen Einstellbarkeit der Fahrwerkscharakteristik erfindungsgemäß erheblich.

Durch das erfindungsgemäße Verschieben zumindest des ersten Verbindungspunkts des Dämpfungselements erfolgt ein Verändern des Negativfederwegs. Dies liegt im Wesentlichen darin begründet, dass sich der Abstand zum Lagerpunkt der Wippe und somit der Hebelarm des Dämpfers im Verhältnis zum Hebelarm der Sitzstrebe verändert.

In einer weiteren bevorzugten Ausführungsform weist das Verschiebeelement ein vorzugsweise in Verschieberichtung wirkendes Federelement auf. Hierbei kann als Federelement eine Spiralfeder oder ein elastomerer Körper wie auch eine mit Gas gefüllte Druckkammer vorgesehen sein. Hierdurch ist es möglich, dass in dem Federelement Energie gespeichert wird. Beispielsweise durch Lösen der Arretierung erfolgt sodann ein Entspannen des Federelements, so dass automatisch ein Verschieben zumindest des ersten Verbindungspunkts und somit ein Verändern der Lage des Dämpfungselements erfolgt. Ebenso ist es möglich, dass beispielsweise durch Entlastung des in dem Verschiebeelement vorgesehenen Federelements automatisch ein Aktivieren des Verschiebeelements erfolgt. Dies erfolgt beispielsweise dadurch, dass der Fahrer aus dem Sattel aufsteht und hierbei das Hinterrad entlastet. Hierdurch erfolgt sodann ein Verändern der Lage des Dämpfungselements in eine Position mit geringerem Negativfederweg und veränderter Geometrie des Hinderbaus. Diese Abstimmung ist für die Bergauffahrt positiv.

Vorzugsweise erfolgt ein Komprimieren des in dem Verschiebeelement vorgesehenen Federelements bei einer Standardgewichtsbelastung, d.h. in üblicher Fahrposition, bei der der Fahrer bei einer im Wesentlichen ebenen Strecke sitzt. Die gespeicherte Energie kann sodann mit Hilfe des Arretierelements derart gespeichert werden, dass erst beim aktiven Lösen des Arretierungselements ein bewusstes Verschieben eines der beiden oder beider Verbindungspunkte des Dämpfungselements erfolgt.

In bevorzugter Weiterbildung des Arretierungsmechanismus ist dieser derart ausgebildet, dass in den beiden Endpositionen stets ein automatisches Arretieren erfolgt. Dies kann beispielsweise auf einfache Weise durch einen federbelasteten Stift erfolgen, der in den jeweiligen Extrempositionen einrastet. Hierdurch ist ein ungewolltes Verändern der Lage des Dämpfungselements vermieden. Sofern das Verschiebeelement beispielsweise ein hydraulisches Betätigungselement aufweist, kann dieses über ein elektrisch betätigbares Magnetventil arretiert werden.

Bei einer besonders bevorzugten Ausführungsform weist das Arretierelement zwei, insbesondere über einen Verbindungskanal miteinander verbundene Fluidkammern auf. Hierbei ist in dem Verbindungskanal ein Ventil angeordnet. In einer der Fluidkammern ist ein Kolben angeordnet, durch den die Längenveränderung des Verschiebeelements und hieraus resultierende Lageveränderung des ersten Verbindungspunktes realisiert ist. Durch Öffnen des Ventils ist ein Verschieben dieses Kolbens in der entsprechenden Fluidkammer möglich. Ein Hin- und Herfördern des Fluids, insbesondere eines Hydrauliköls zwischen den beiden Fluidkammern könnte durch eine Pumpe erfolgen. Bevorzugt ist es jedoch, dass diejenige Fluidkammer, in der der Kolben nicht angeordnet ist, auf eine mit Gas oder einem anderen kompatiblen Medium gefüllte Kammer einwirkt. Ein Einschieben des Kolbens in die entsprechende Fluidkammer und ein hierdurch hervorgerufenes Fördern des Fluids bei geöffnetem Ventil in die andere Fluidkammer bewirkt somit ein Komprimieren des Gases oder dergleichen. Ein Schließen des Ventils bewirkt sodann ein Arretieren des verschiebbaren Kolbens, da das Fluid trotz des durch den Gasdruck aufgebauten Drucks nicht zurück in die erste Fluidkammer strömen kann, in der der Kolben angeordnet ist. Entsprechend bewirkt ein Öffnen des Ventils sodann ein Einströmen des Fluids in diese erste Fluidkammer und somit ein Herausdrücken des Kolbens. Hierdurch ist eine Längenveränderung des Verstellelements in dessen Längsrichtung und somit ein Verschieben des ersten Verbindungspunkts möglich.

Es ist somit insbesondere mit Hilfe eines am Lenker vorgesehenen Betätigungselements auf einfache Weise möglich, ein entsprechendes Ventil zu öffnen. Bei geöffnetem Ventil kann der Fahrer durch eine entsprechende Gewichtsverlagerung ein Komprimieren oder Expandieren des sich in der Kammer befindlichen komprimierbaren Mediums bewirken. Hierdurch erfolgt ein Strömen des Fluids, insbesondere des Hydrauliköls von einer Fluidkammer in die andere Fluidkammer und sodann ein entsprechendes Verschieben des in der ersten Fluidkammer angeordneten Kolbens. Dies bewirkt eine Lageveränderung des ersten Verbindungspunkts.

Ein Aktivieren des Ventils, d.h. ein Öffnen und Schließen des Ventils könnte auch durch eine Sensorik erfolgen. Die Sensorik könnte beispielsweise einen Neigungssensor aufweisen, so dass eine Lageveränderung des ersten Verbindungspunkts in Abhängigkeit der Neigung erfolgt. Gegebenenfalls könnte hierbei auch die Geschwindigkeit des Fahrrads berücksichtigt werden.

In besonders bevorzugter Ausführungsform ist der Hinterbau unmittelbar mit dem Hauptrahmenelement über das Hauptschwingenlager verbunden. Das Hauptschwingenlager ist somit in das Hauptrahmenelement integriert oder über ein Zwischenelement steif mit dem Hauptrahmenelement verbunden. Es erfolgt somit vorzugsweise kein Bewegen des Hauptschwingenlagers beim Betätigen des Verschiebeelements. Die vom Hinterbau über das Hauptschwingenlager in das Hauptrahmenelement eingeleiteten Kräfte und Momente müssen somit nicht über ein Zwischenelement übertragen werden. Hierdurch kann das Gewicht des Fahrradrahmens erheblich reduziert werden, insbesondere gegenüber der in US 7,712,757 beschriebenen Ausgestaltung des Hinterbaus.

Nachfolgend wird die Erfindung anhand einer bevorzugten Ausführungsform unter Bezugnahme auf die anliegenden Zeichnungen näher erläutert.

Es zeigen:
- Figur 1: eine stark vereinfachte schematische Seitenansicht eines Mountainbikes,
- Figur 2: eine schematische Seitenansicht eines montierten Dämpfungselements entsprechen Figur,
- Figur 3: eine schematische Schnittansicht einer bevorzugten Ausführungsform des Verschiebeelements in ausgefahrener Position,
- Figur 4: eine schematische Schnittansicht einer bevorzugten Ausführungsform des Verschiebeelements in eingefahrener Position,
- Figur 5: eine schematische Teil-Schnittansicht des in dem Verschiebeelement gemäß Figur 3 und 4 angeordneten Ventils und
- Figuren 6-11: schematische Ansichten unterschiedlicher Hinterbaukonstruktionen mit unterschiedlicher Anordnung des Dämpfelements.

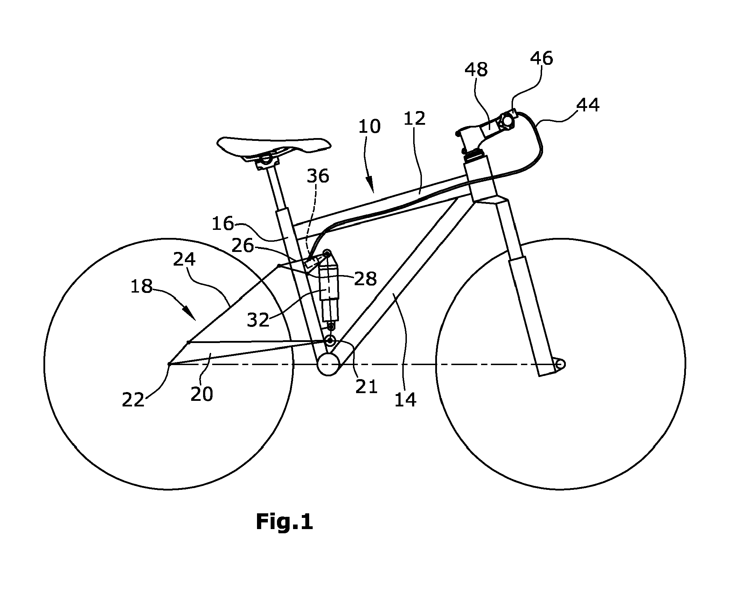

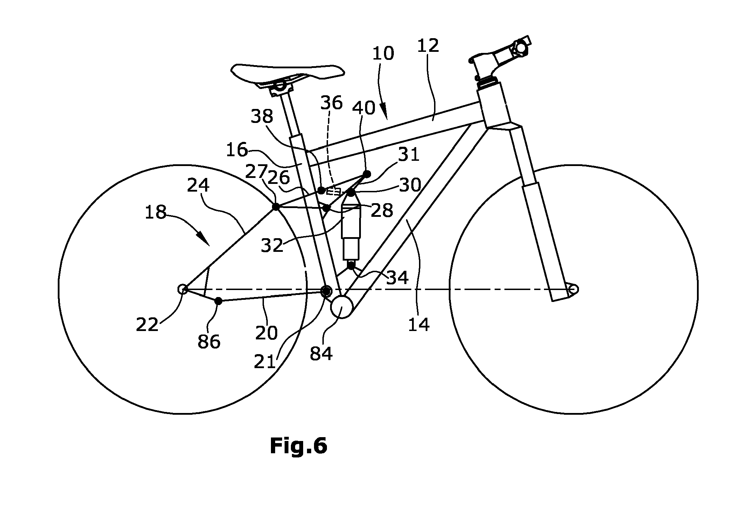

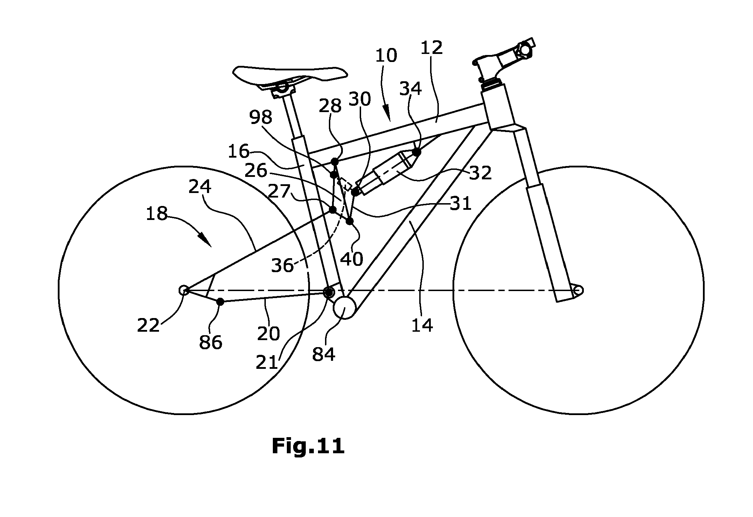

Bezogen auf Figur 1 wird anhand eines Beispiels eine mögliche Ausgestaltung eines Hauptrahmenelements sowie eines Hinterbaus in Verbindung mit einem über eine Wippe angelenkten Dämpferelement beschrieben. Unterschiedliche mögliche Ausgestaltungen sind insbesondere anhand der Figuren 6 - 11 dargestellt.

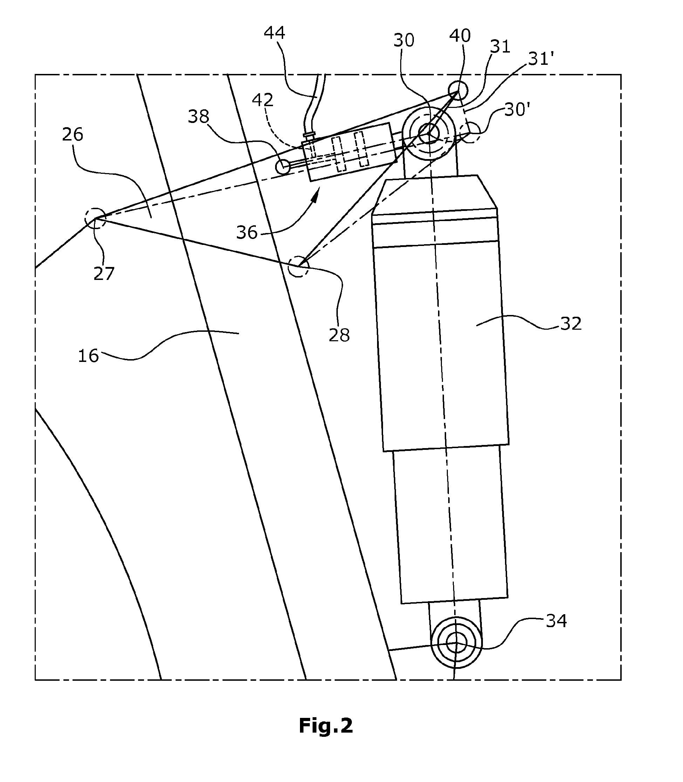

Ein Mountainbike weist ein Hauptrahmenelement 10 auf, das im dargestellten Ausführungsbeispiel ein Oberrohr 12, ein Unterrohr 14 und ein Sattelrohr 16 aufweist. Das Hauptrahmenelement 10 ist mit einem Hinterbau 18 verbunden. Der Hinterbau 18 weist zwei Kettenstreben 20 auf, an deren Ausfallende 22 die Hinterradachse gehalten ist. In diesem Bereich der Kettenstreben 20 sind zwei in Richtung des Sattelrohrs 16 weisende Sitzstreben 24 angeordnet. Die Sitzstreben 24 sind mit den Ausfallenden der Kettenstreben 20 sowie mit einer schematisch als Dreieck dargestellten Wippe 26 schwenkbar an einem zweiten Anlenkpunkt 27 an einem zweiten Anlenkpunkt 27 verbunden. Die Wippe 26, die in den Figuren schematisch als Dreieck dargestellt ist, ist über einen ersten Anlenkpunkt 28 (Fig. 2) schwenkbar mit dem Sattelrohr 16 verbunden. Ein Dämpferelement 32 weist einen ersten Verbindungspunkt 30 (Figur 2) auf, der über ein Hebelelement 31 mit einem dritten Anlenkpunkt 40 der Wippe 26 verbunden ist. Ein zweiter Verbindungspunkt 34 des Dämpferelements 32 ist über ein starres Verbindungselement oder dergleichen wiederum mit dem Sattelrohr 16 verbunden.

In allen dargestellten Ausführungsbeispielen ist der erste Verbindungspunkt 30 in seiner Lage variabel. Hierzu ist ein Verschiebeelement 36 vorgesehen, das im dargestellten Ausführungsbeispiel in die Wippe 26 im Wesentlichen integriert ist. Das Verschiebeelement 36 ist mit einem Endpunkt 38 (Figur 2) an der Wippe 26 oder dem Sattelrohr 16 fixiert. Das andere Ende des Verschiebeelements 36 ist mit dem ersten Verbindungspunkt 30 verbunden.

In der in Figur 2 dargestellten Position befindet sich das Dämpfungselement 32 in der Standard-Gewichtsbelastung, in der ein verhältnismäßig großer Negativfederweg eingestellt werden kann. Beim Bergauffahren erfolgt ein Verschieben des oberen bzw. ersten Verbindungspunkts 30 in Figur 2 nach rechts. Dies erfolgt durch Dekomprimieren bzw. Entspannen eines in Figur 2 als Pneumatikkolben ausgebildeten Verschiebeelements. Hierdurch wird der erste Verbindungspunkt 30 um den dritten Anlenkpunkt 40 verschwenkt, so dass der Verbindungspunkt 30 in die Lage 30' verschwenkt wird. Dies führt zu einem Verkippen des Dämpfungselements 32 in Figur 2 nach rechts um den zweiten Verbindungspunkt 34.

Zusätzlich zu einem Verschieben des ersten Verbindungspunktes 30 wäre auch ein Verschieben des zweiten Verbindungspunktes 34 möglich.

In einer besonders bevorzugten Ausführungsform ist eine Art Fernbedienung für das Verschiebeelement 36 vorgesehen. Im dargestellten Ausführungsbeispiel weist das Verschiebeelement 36 hierzu ein Arretierelement 42 (Figur 2) auf, bei dem es sich beispielsweise um ein stiftförmiges Arretierelement handeln kann. Das Arretierelement 42 ist über ein Betätigungsmittel betätigbar. Das Betätigungsmittel weist beispielsweise ein als Hebel ausgebildetes Betätigungselement 46 (Figur 1) auf, das an einem Lenker 48 angeordnet ist. Das insbesondere als Hebel ausgebildete Betätigungselement 46 ist über ein Übertragungselement 44, bei dem es sich im dargestellten Ausführungsbeispiel um einen Seilzug handelt, mit dem Arretierelement 42 verbunden.

Ebenso kann die Betätigung elektrisch oder auch über Funk erfolgen. Als Betätigungselement ist sodann am Lenker 48 beispielsweise eine Taste angeordnet. Das Verschiebeelement 36 kann beispielsweise auch als elektrischer Stellmotor, beispielsweise in Verbindung mit einer entsprechend ausgebildeten Kulissenführung zur Verschiebung des ersten Verbindungspunktes 30 ausgebildet sein.

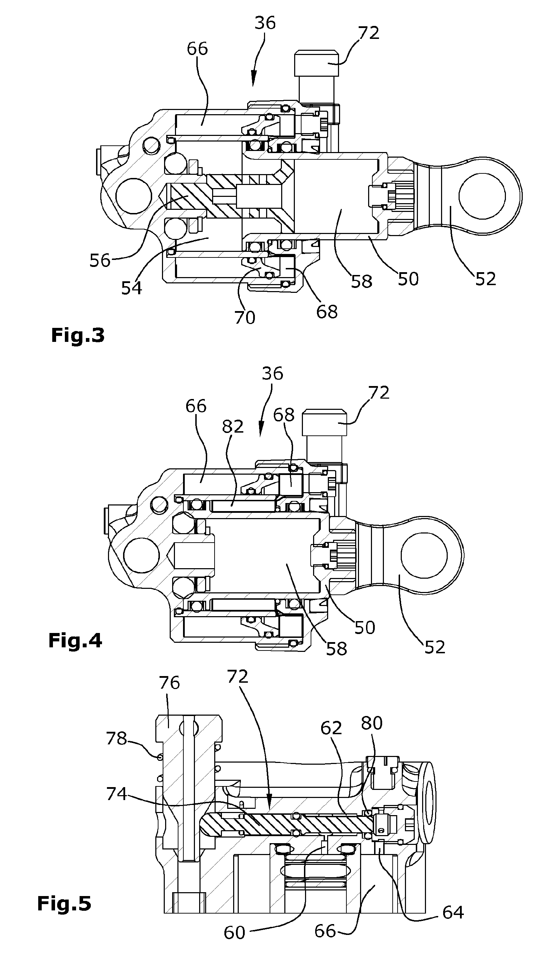

Besonders bevorzugt ist die Ausgestaltung des Verbindungselements 36 als pneumatisches und/ oder hydraulisches Element. Eine besonders bevorzugte Ausführungsform eines derartigen Verschiebeelements wird nachfolgend anhand der Figuren 3 bis 5 beschrieben.

Diese bevorzugte Ausführungsform des Verbindungselements 36 weist einen Kolben 50 auf der über ein Verbindungselement 52 mit dem ersten Verbindungspunkt 30 des Dämpferelements 32 verbunden ist. Der Kolben 50 ist in einer ersten mit Hydrauliköl gefüllten Kammer 54 angeordnet. Die erste Fluidkammer 54 ist über eine Bohrung 60 (Figur 5), einen Kanal 62 und eine weitere Bohrung 64 mit einer zweiten Fluidkammer 66 verbunden. Die zweite Fluidkammer 66 umgibt die erste Fluidkammer 54 kreisringförmig. In Längsrichtung an die zweite Fluidkammer 66 schließt sich eine Gaskammer 68, die insbesondere mit Luft gefüllt ist, an. Zwischen der zweiten Fluidkammer 66 und der Gaskammer 68 ist ein ringförmiges Trennelement 70 angeordnet. Die Gaskammer 68 ist über einen nicht sichtbaren Kanal mit einem Ventil 72 verbunden, über das der Gaskammer 68 Druckluft zugeführt werden kann.

Das Betätigen des Verschiebeelements 36 erfolgt über ein in Figur 5 sichtbares als Nadelventil ausgebildetes Ventil 72. In der dargestellten Stellung verschließt eine Ventilnadel 74 den mit der äußeren Fluidkammer verbundenen Kanal 62. Mit Hilfe eines Ventil-Betätigungselements 76 kann die Ventilnadel 74 nach innen verschoben werden. Das Ventil-Betätigungselement 76 ist mit einem nicht dargestellten Seilzug verbunden, der sodann mit einem insbesondere am Lenker 48 (Figur 1) befestigten Betätigungselement 46 verbunden ist. Der Seilzug läuft in Figur 5 nach links, so dass durch Ziehen an dem Seilzug das Ventil-Betätigungselement 76 gegen eine vor einer Spiralfeder 78 aufgebrachte Kraft nach links bewegt wird. Hierdurch erfolgt ein Verschieben der Ventilnadel 74 nach innen. Das Verschieben der Ventilnadel 74 nach innen bewirkt ein Verschieben des mit der Ventilnadel verbundenen Dichtrings 80. Hierdurch wird der Kanal 62 geöffnet, so dass Fluid durch die Öffnung 60 in den Kanal 62 und durch die Öffnung 64 strömen kann. Hierdurch ist es möglich, den Kolben 50 in Figur 3 nach links zu bewegen bzw. in das Verschiebeelement 36 hineinzudrücken. Dies erfolgt durch das Körpergewicht des Fahrers. Beim Hineindrücken des Kolbens 50 strömt sodann das Hydraulikfluid aus der ersten Fluidkammer durch die Öffnung 60 in den Kanal 62 und sodann durch die Öffnung 64 in die zweite äußere Fluidkammer 66. Dies bewirkt ein Verschieben des ringförmigen Trennelements 70 in Figur 3 nach rechts und ein Komprimieren des Gases in der Gaskammer 68.

Sobald das Betätigungselement 46 (Figur 1) wieder losgelassen wird, bewegt die Spiralfeder 78 (Figur 5) das Ventil-Betätigungselement 76 in Figur 5 nach rechts. Aufgrund des herrschenden Gegendrucks wird die Ventilnadel 74 wieder in die in Figur 5 dargestellte Stellung zurückgedrückt. Somit ist das Verschiebeelement bzw. der Kolben 50 des Verschiebeelements in der eingefahrenen Position arretiert.

In der in Figur 4 dargestellten eingefahrenen Position 4 herrscht in der Gaskammer 68 ein erhöhter Druck. Wie in Figur 4 durch die Umrandung dargestellt, ist die Gaskammer 68 ferner mit einer ringförmigen den Kolben 50 umgebenden Kammer 82 verbunden. Die Kammer 82 weist ein erheblich kleineres Volumen als die Kammer 68 auf. Durch die vorgespannte Luft in Kammer 82 wird dem Ausfedern des Fahrwerks bei Zugbelastungen, die durch dynamische Ausfederbewegungen des Fahrwerks verursacht werden, entgegengewirkt. Es wäre nicht ausreichend nur das Hydraulikventil zu schließen, da das Öl ausgast, sobald die Hydraulikflüssigkeit mit Unterdruck beaufschlagt wird. Als Folge würde der Kolben ungewollt ausfedern, je nach dynamischer Ausfedergeschwindigkeit des Hinterbaus.

Zum Verschieben des Kolbens 50 aus der eingefahrenen Position (Figur 4) in die ausgefahrene Position (Figur 3) erfolgt wiederum, wie vorstehend beschrieben, ein Öffnen des Ventils 72. Aufgrund des in der Gaskammer 68 herrschenden Drucks wird bei geöffnetem Ventil 72 Fluid aus der zweiten äußeren Fluidkammer 66 über die Öffnung 64 in den Kanal 62 und durch die Öffnung 60 in die erste innere Fluidkammer 54 gedrückt. Dies bewirkt ein Bewegen des Kolbens 50 nach außen und somit ein Verschieben des ersten Verbindungspunktes 30 des Dämpfers 32.

In den in den Figuren 6 bis 11 dargestellten unterschiedlichen Ausgestaltungen sind ähnliche und identische Bauteile mit denselben Bezugszeichen gekennzeichnet. Sämtliche Ausführungsformen weisen stets eine Wippe 26 auf, die, wie vorstehend erläutert, über das Verschiebeelement 36 mit dem ersten Verbindungspunkt 30 des Dämpfers 32 verbunden ist. In sämtlichen Ausführungsformen ist das identische vorstehend beschriebene Prinzip der Lageveränderung des ersten Verbindungspunkts 30 realisiert. Sämtliche Ausführungsformen bewirken stets ein Verschieben des ersten Verbindungspunkts 30 und somit eine Veränderung der Rahmengeometrie. Je nach Lage des Dämpfers 32 erfolgt eine Veränderung der Neigung des Sattelrohrs 16 und somit ein Verändern der Lage des Sattels. Ferner ändert sich die Höhe des Tretlagers 84 je nach Lage des Dämpfers 32. Dies bewirkt ein Verändern der Bodenfreiheit.

In Figur 6 ist der Hinterbau 18 als Vier-Gelenker, mit einem Hinterbaugelenk unterhalb der Hinterradachse mit stehendem Dämpfer 32 ausgebildet. Hierbei sind die Kettenstreben 20 über ein tretlagerseitiges Gelenk 21 mit dem Hauptrahmenelement 10 verbunden. In den Kettenstreben 20 ist ein weiteres Gelenk 86 angeordnet. Im Bereich der Ausfallenden 22 ist der Hinterbau steif ausgebildet und sodann über die Sattelstreben 24 mit dem zweiten Anlenkpunkt 27 der Wippe 26 verbunden. Der zweite Verbindungspunkt 34 des Dämpfers 32 ist mit dem Hauptrahmenelement im Bereich des Unterrohrs 14 schwenkbar mit diesem verbunden.

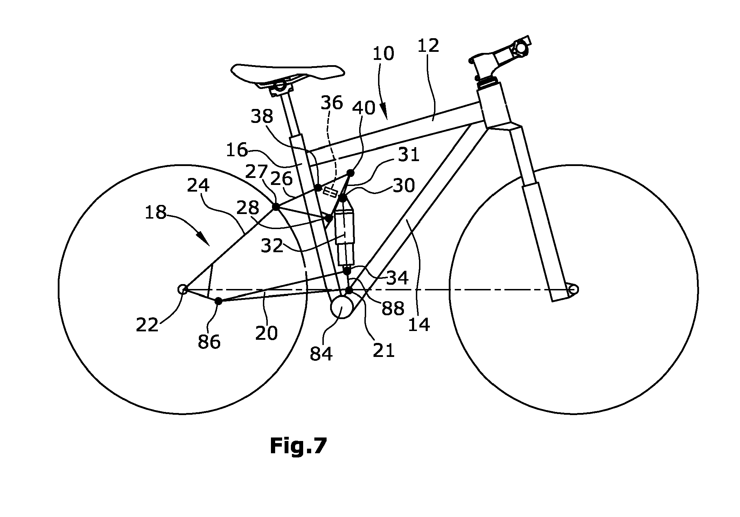

Die in Figur 7 dargestellte Ausführungsform ist ähnlich der in Figur 6 dargestellten Ausführungsform mit dem Unterschied, dass der zweite Verbindungspunkt des Dämpfers 32 nicht fest mit dem Rahmenelement 10, sondern verschiebbar gegenüber dem Rahmenelement 10 angeordnet ist. Hierzu ist der Verbindungspunkt 34 über ein stegförmiges Zwischenelement 88 mit dem Hauptschwingenlager 21 verbunden. Die Kettenstrebe 20 ist sowohl mit dem zweiten Verbindungspunkt 34 als auch mit dem Hauptschwingenlager 21 verbunden.

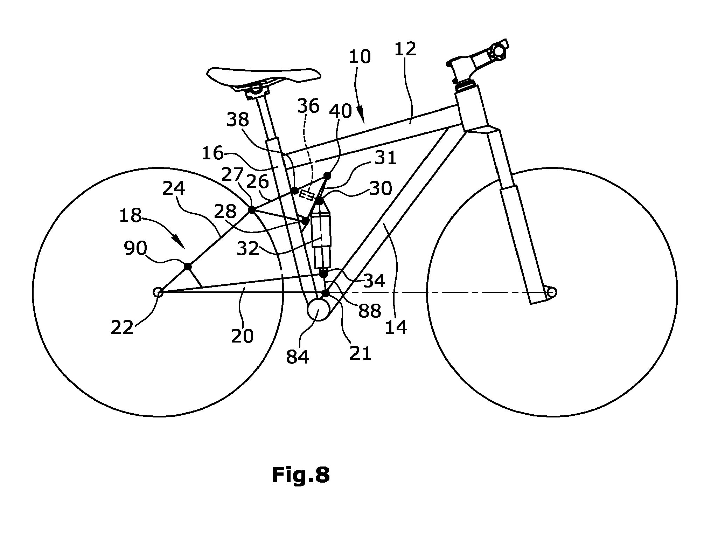

Bei der in Figur 8 dargestellten Ausführungsform erfolgt entsprechend Figur 7 eine schwimmende Verbindung des zweiten Verbindungspunkts 34 über ein stegförmiges Zwischenelement 88 mit dem Hauptschwingenlager 21. Bei dieser Ausführungsform ist in den Kettenstreben 20 kein Gelenk angeordnet. Stattdessen ist in den Sitzstreben 24 ein zusätzliches Gelenk 90 vorgesehen, so dass es sich bei der dargestellten Hinterbaukonstruktion um einen sogenannten abgestützten Ein-Gelenker handelt.

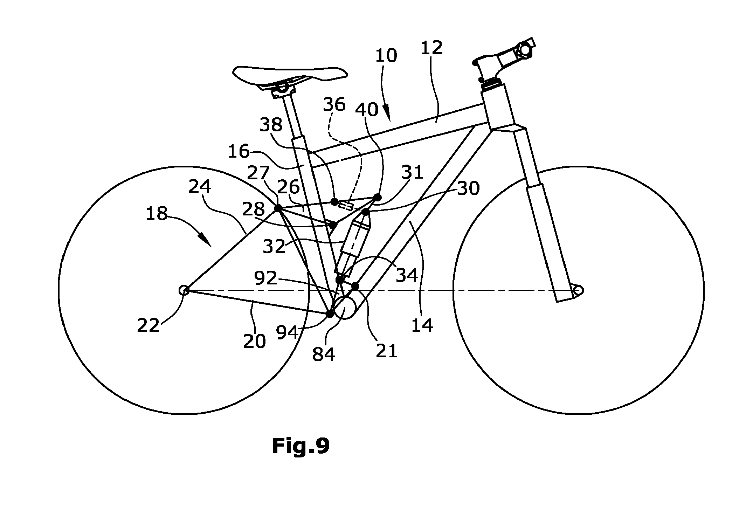

Bei der in Figur 9 dargestellten Hinterbaukonstruktion handelt es sich um eine sogenannte VPP-Hinterbaukonstruktion. Hierbei ist der zweite Verbindungspunkt 34 über ein dreieckförmiges Zwischenelement 92 gelenkig mit dem Hauptschwingenlager 21 sowie einem Hinterbaugelenk 94 verbunden. Das Hinterbaugelenk 94 ist sodann mit starren Kettenstreben 20 verbunden. Die Sitzstreben 24 sind wiederum ohne Vorsehen eines Gelenks mit den Ausfallenden 22 und dem zweiten Anlenkpunkt 27 der Wippe 26 verbunden.

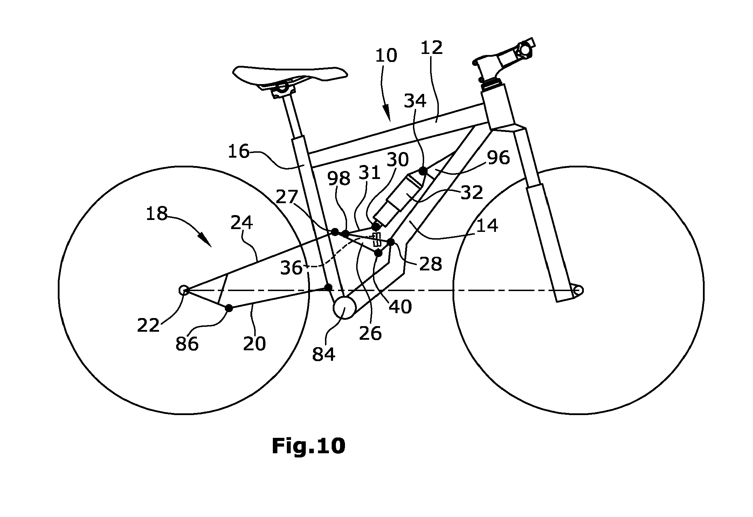

Bei der in Figur 10 dargestellten Ausführungsform ist der Dämpfer 32 im Wesentlichen parallel zum Unterrohr angeordnet. Der zweite Verbindungspunkt 34 ist über ein Verbindungselement 96 fest mit dem Unterrohr 14 verbunden. Die Wippe 26 ist entsprechend über den ersten Anlenkpunkt 28 ebenfalls mit dem Unterrohr 14 verbunden. Der zweite Anlenkpunkt 27 der Wippe 26 ist mit den Kettenstreben 24 verbunden. Ebenfalls in die Wippe 26 integriert, ist das Verschiebeelement 36. Dies ist im dargestellten Ausführungsbeispiel über den dritten Anlenkpunkt 40 mit der Wippe 26 verbunden. Des Weiteren ist entsprechend der erfindungsgemäßen Konstruktion ein Hilfshebel 31 sowohl mit dem ersten Verbindungspunkt 30 des Dämpfers 32 als auch mit der Wippe 26 verbunden. Dies erfolgt im dargestellten Ausführungsbeispiel über ein Hilfslager 98. Im übrigen ist der Hinterbau, wie insbesondere anhand Figur 6 beschrieben, als Viergelenker ausgebildet, so dass in den Kettenstreben 20 jeweils ein Gelenk 86 vorgesehen ist.

Ähnlich der in Figur 10 dargestellten Ausführungsform kann der Dämpfer 32 auch im Wesentlichen parallel zum Oberrohr 12 verlaufen. Die Wippe 26 ist sodann über ihren ersten Anlenkpunkt 28 ebenfalls am Oberrohr 12 befestigt. Der zweite Anlenkpunkt 27 ist wiederum mit den Kettenlstreben 24 verbunden. Der Hilfshebel 31 ist mit dem ersten Verbindungspunkt 30 des Dämpfers 32 sowie mit dem dritten Anlenkpunkt 40 der Wippe 26 verbunden.

Das Verschiebeelement 36 ist über ein Hilfslager 98 mit der Wippe 26 und mit dem ersten Verbindungspunkt 30 verbunden.

## Patentansprüche

1. Fahrradrahmen, insbesondere Mountainbike- oder Trackingradrahmen, mit
einem mit einem Hauptrahmenelement (10) über eine Wippe (26) schwenkbar verbundenen Hinterbau (18),
einem zwischen dem Hinterbau (18) und dem Hauptrahmenelement (10) angeordneten Dämpfungselement (32), das über einen ersten Verbindungspunkt (30) mit der Wippe (26) und über einen zweiten Verbindungspunkt (34) mit dem Hauptrahmenelement (10) verbunden ist, und
einem Verschiebeelement (36) zur Lageveränderung des Dämpferelements (32),
**dadurch gekennzeichnet, dass**
das Verschiebeelement (36) mit dem ersten Verbindungspunkt (30) zu dessen Lageveränderung verbunden ist.

2. Fahrradrahmen nach Anspruch 1, **dadurch gekennzeichnet, dass** ein zweiter Anlenkpunkt (27) der Wippe (26) mit dem Hinterbau (18), insbesondere den Sitzstreben (24) des Hinterbaus (18), verbunden ist.

3. Fahrradrahmen nach Anspruch 1 oder 2, **dadurch gekennzeichnet, dass** ein dritter Anlenkpunkt (40) der Wippe (26) mit dem Dämpfungselement (32) verbunden ist.

4. Fahrradrahmen nach Anspruch 3, **dadurch gekennzeichnet, dass** der dritte Anlenkpunkt (40) mit Hilfe des Verschiebeelements (36) in seiner Lage verschiebbar ist, so dass das Dämpfungselement (32) in zumindest zwei unterschiedlichen Positionen mit der Wippe (26) verbindbar ist.

5. Fahrradrahmen nach einem der Ansprüche 1 bis 4, **dadurch gekennzeichnet, dass** das Verschiebeelement (36) mit der Wippe (26) verbunden ist.

6. Fahrradrahmen nach einem der Ansprüche 1 bis 5, **dadurch gekennzeichnet, dass** der erste Verbindungspunkt (30) über ein Hebelelement (31) mit der Wippe (26) verbunden ist, wobei das Verschiebeelement (36) zur Lageveränderung des ersten Verbindungspunkts (30) vorzugsweise auf das Hebelelement (31) einwirkt.

7. Fahrradrahmen nach einem der Ansprüche 1 bis 6, **dadurch gekennzeichnet, dass** das Verschiebeelement (36) zur Lageveränderung des ersten Verbindungspunktes (30) längenverstellbar ist.

8. Fahrradrahmen nach einem der Ansprüche 1 bis 7, **dadurch gekennzeichnet, dass** das Verschiebeelement (36) zur Lageveränderung des ersten Verbindungspunkts (30) ein vorzugsweise in Verschieberichtung wirkendes Federelement aufweist oder ein um Gelenkpunkt (40) wirkendes Drehfederelement aufweist.

9. Fahrradrahmen nach Anspruch 8, **dadurch gekennzeichnet, dass** das Federelement bei einer Gewichtsentlastung des Hinterbaus (18) ein Verschieben des Dämpfungselements (32) in eine Position mit geringerem Negativfederweg (Kennlinienveränderung) und/ oder eine Veränderung der Hinterbaugeometrie bewirkt.

10. Fahrradrahmen nach Anspruch 8 oder 9, **dadurch gekennzeichnet, dass** das Federelement bei einer Standard-Gewichtsbelastung komprimiert ist.

11. Fahrradrahmen nach einem der Ansprüche 1 bis 10, **dadurch gekennzeichnet, dass** das Verschiebeelement (36) zumindest in einer Position, insbesondere in den beiden Extrempositionen durch ein Arretierelement (42, 72) arretierbar ist.

12. Fahrradrahmen nach Anspruch 11, **dadurch gekennzeichnet, dass** das Arretierelement zwei über ein Ventil (72) mit einander verbundene Fluidkammern (54, 56) aufweist, wobei vorzugsweise eine der Fluidkammern (66) auf das vorzugsweise als Gaskammer (68) ausgebildete Federelement wirkt.

13. Fahrradrahmen nach einem der Ansprüche 11 oder 12, **dadurch gekennzeichnet, dass** das Arretierelement, insbesondere das Ventil (72) des Arretierelmenents mit einem Betätigungsmittel (44, 46) zur entfernten Betätigung verbunden ist.

14. Fahrradrahmen nach Anspruch 13, **dadurch gekennzeichnet, dass** das Betätigungsmittel ein insbesondere am Lenker (48) befestigbares Betätigungselement (46) wie einen Betätigungshebel aufweist.

15. Fahrradrahmen nach Anspruch 13 oder 14, **dadurch gekennzeichnet, dass** das Betätigungsmittel ein mit dem Betätigungselement (46) und dem Arretierelement (42) verbundenes Übertragungselement (44) wie einen Seilzug, eine Hydraulikleitung und/ oder eine elektrische Leitung aufweist.
